(19) Europäisches Patentamt
European Patent Office
Office européen des brevets

(11) **EP 2 290 945 B1**

(12) **EUROPEAN PATENT SPECIFICATION**

(45) Date of publication and mention of the grant of the patent:
**31.08.2016 Bulletin 2016/35**

(51) Int Cl.:
***H04N 5/16*** *(2006.01)*     ***H04N 5/20*** *(2006.01)*
***H04N 5/57*** *(2006.01)*

(21) Application number: **08777221.6**

(22) Date of filing: **13.06.2008**

(86) International application number:
**PCT/JP2008/060910**

(87) International publication number:
**WO 2009/150749 (17.12.2009 Gazette 2009/51)**

(54) **PICTURE CORRECTING DEVICE, PICTURE CORRECTING PROGRAM AND PICTURE CORRECTING METHOD**

BILDKORREKTUREINRICHTUNG, BILDKORREKTURPROGRAMM UND BILDKORREKTURVERFAHREN

DISPOSITIF DE CORRECTION D'IMAGE, PROGRAMME DE CORRECTION D'IMAGE ET PROCÉDÉ DE CORRECTION D'IMAGE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**02.03.2011 Bulletin 2011/09**

(73) Proprietor: **Fujitsu Limited**
**Kawasaki-shi, Kanagawa 211-8588 (JP)**

(72) Inventors:
• **YU, Shanshan**
**Kawasaki-shi**
**Kanagawa 211-8588 (JP)**

• **SHIMIZU, Masayoshi**
**Kawasaki-shi**
**Kanagawa 211-8588 (JP)**

(74) Representative: **Stebbing, Timothy Charles**
**Haseltine Lake LLP**
**Lincoln House, 5th Floor**
**300 High Holborn**
**London WC1V 7JH (GB)**

(56) References cited:
**GB-A- 2 408 138**     **GB-A- 2 418 316**
**JP-A- 4 110 920**     **JP-A- 2007 189 575**
**JP-A- 2008 059 374**     **US-A1- 2002 036 716**
**US-A1- 2004 201 561**

**Description**

TECHNICAL FIELD

The present invention relates to an image correcting apparatus, an image correcting program, and an image correcting method.

BACKGROUND ART

In general, a visual quality of an image in a reproduction of a dark scene (a dark area) in a digital television depends on how a block color is output. Therefore, it has been conventionally demanded in a correction of a digital image to suppress a black floating phenomenon which is caused when a dark area becomes bright and a black defacement phenomenon which is caused when a dark area becomes darker.

In response, there have been various disclosed techniques for correcting a dark image in recent years.

For example as a technique for correcting a dark image, there is a technique of correcting, based on an average brightness of an image, a darker image into a brighter image. Besides, as a general dynamic range correction technique for example, there is a technique of making a correction via a linear interpolation in which pixels the number of which is approximately 0.1% to 1.0% of an entire image in the darkest area are made level "zero".

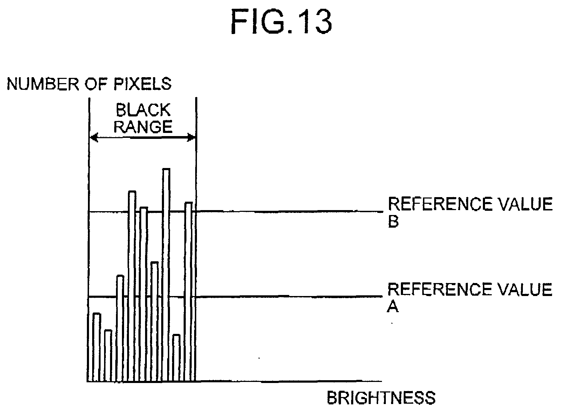

In addition, Patent Document 1, for example, discloses a technique of generating a histogram of an entire image and calculating a correction amount in a black range which is a dark area of the image as illustrated in FIG. 13 based on the number of distribution of pixels which are not more than a reference value A and on the number of distribution of pixels which are not less than a reference value B. FIG. 13 is a view for explaining a conventional technique of correcting a dark image.

Patent Document 2 discloses a technique for performing gamma correction processing when there are a plurality of characteristic areas, each of which is characterized by the high frequency in a luminance histogram to improve the impression of contrast. A luminance characteristic detector detects the luminance of an input image signal and a microcomputer calculates an APL (average picture level) and a luminance histogram of an input image signal. A gamma correction circuit performs the gamma correction processing in response to the luminosity of the input image signal by use of the result of the calculation carried out by the microcomputer. Then, if there are a plurality of characteristic areas, each of which is characterized by the high frequency in the luminance histogram, a characteristic emphasis circuit performs greyscale extension processing for the plurality of characteristic areas.

Patent Document 3 discloses an automatic video processing system provided with: a pedestal clamp part for clamping a video signal at a pedestal level; an A/D converting part for converting a pedestal clamped video signal into a digital signal; an APL (average picture luminance) detecting part for acquiring an APL for a video signal one field period from A/D converted discrete data; an APL comparing part for comparing the detected APL with a reference value; a histogram operating part for acquiring a histogram (frequency distribution) of luminance constituting the video signal one field; a histogram comparing part for comparing the acquired histogram with the reference value; a control part for determining whether a signal is set up on the basis of results obtained from the APL comparing part and the histogram comparing part; an operating part for performing gradation correction of a set up signal so as to decrease a black level and simultaneously keep a peak level uniform; a video signal processing part for processing an inputted video signal; and a display part for displaying a video signal subjected to optimum video signal processing.

Patent Document 1: Japanese Laid-open Patent Publication No. 06-332399
Patent Document 2: GB2418316A
Patent Document 3: JP2007/189575A

DISCLOSURE OF INVENTION

PROBLEM TO BE SOLVED BY THE INVENTION

However, the conventional technique described above has a problem that the black floating phenomenon or the black defacement phenomenon cannot be suppressed.

Specifically, there is a possibility, in the technique of correcting an image based on an average brightness of an entirety of an image, of causing the black floating phenomenon depending on the image since the image determined to be a dark image is corrected at any time to be bright by a definite measure. Besides, in correcting an image of a significant darkness, the dark image is not corrected because the dark image already contains pixels of level "zero" not less than 1.0% while there is an advantage in correcting an image of a normal brightness in the general dynamic range correction technique.

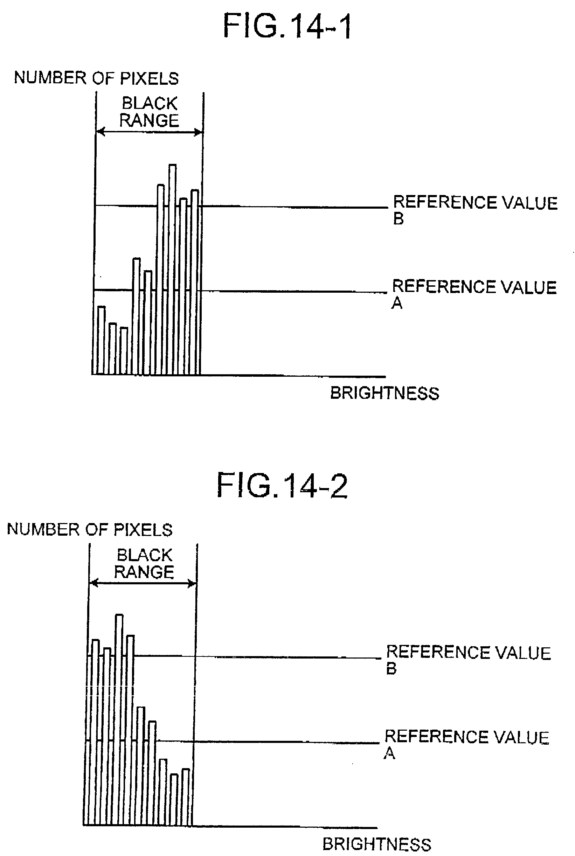

Furthermore, Patent Document 1 includes a possibility of causing the black floating phenomenon when pixels in a black range concentrate especially in a bright range (when the number of pixels having a higher brightness in the black range is large) as illustrated in FIG. 14-1. Moreover, Patent Document 1 includes a possibility of causing the black defacement phenomenon when pixels in the black range concentrate especially in a dark range (when the number of pixels having a lower brightness is large) as illustrated in FIG. 14-2.

In other words, for calculating a correction amount similarly with respect to an image illustrated in FIG. 14-1 or an image illustrated in FIG. 14-2, Patent Document 1 has a possibility of causing the black floating phenomenon or the black defacement phenomenon in at least one image. As a result of this, the black floating phenomenon or the black defacement phenomenon cannot be suppressed in the conventional technique described above. Here, FIG. 14-1 is a view illustrating a dark area pixels of which concentrate in a bright range in an image and FIG. 14-2 is a view illustrating a dark area pixels of which concentrate in a dark range in an image.

The present invention is achieved to solve the problems in the above-described conventional technique and an object of the present invention is to provide an image correcting apparatus, an image correcting program, and an image correcting method which enable suppression of the black floating phenomenon or the black defacement phenomenon in correcting a dark image.

## MEANS FOR SOLVING PROBLEM

To solve the problems described above and achieve the object, an image correcting apparatus disclosed in the application requires to include an image determining unit operable to determine based on a pixel value of each pixel of a processing target image whether or not the processing target image is a dark image; a dark area distribution balance calculator operable to calculate, when the processing target image is determined by the image determining unit to be the dark image, a distribution balance of a frequency of appearance of pixels in a dark area of the processing target image, the dark area being an area where the pixels have a smaller pixel value than a first value, divide the dark area of the processing target image into a very dark area and a slightly dark area using an average brightness adjacent to a peak of the dark area, and calculate a distribution balance of a frequency of appearance of pixels in the very dark area based on the number of pixels; and a correction amount determining unit operable to determine a correction amount with respect to the processing target image based on the distribution balance calculated by the dark area distribution balance calculator.

## EFFECT OF THE INVENTION

The image correcting apparatus according to the present invention has an advantage that the black floating phenomenon or the black defacement phenomenon can be suppressed in correcting a dark image.

## BRIEF DESCRIPTION OF DRAWINGS

FIG. 1 is a view of a configuration of an image correcting apparatus according to a first embodiment.

FIG. 2 illustrates an example of a relation between brightness and the number of pixels of a processing target image which is determined to be a dark image.

FIG. 3 illustrates an example of correction curves to be used when there is a possibility of causing a black floating phenomenon.

FIG. 4 illustrates an example of a correction curve to be used when there is a possibility of causing a black defacement phenomenon.

FIG. 5 is a view for explaining a determination of a parameter value $\alpha$.

FIG. 6 illustrates an example of a correction curve to be used when a processing target image is determined to be a normal image.

FIG. 7 is a view for explaining a determination of a parameter value $\alpha$.

FIG. 8 is a flowchart for explaining a flow of an entire process performed by the image correcting apparatus according to the first embodiment.

FIG. 9 is a view for explaining an example of calculating a peak in a dark area of an image by using a coefficient.

FIG. 10 is a view for explaining an example of calculating a peak in a dark area of an image by using an average brightness of an area remained after excluding a pixel having a large pixel value.

FIG. 11 is a flowchart for explaining a flow of a process of calculating a distribution balance in a dark area by using a ratio.

FIG. 12 illustrates a computer which executes an image correcting program.
FIG. 13 is a view for explaining a technique of correcting a dark image according to a conventional technique.
FIG. 14-1 is a view illustrating a dark area pixels of which concentrate in a bright range in an image.
FIG. 14-2 is a view illustrating a dark area pixels of which concentrate in a dark range in an image.

EXPLANATIONS OF LETTERS OR NUMERALS

10 Image correcting apparatus

20 Storage unit
30 Control unit
31 Image determining unit
32 Dark area distribution balance calculator
33 Correction amount determining unit
34 Image correcting unit

BEST MODE(S) FOR CARRYING OUT THE INVENTION

Exemplary embodiments of an image correcting apparatus according to the present invention will be explained in detail below with reference to the accompanying drawings.

First embodiment

Brief overview of image correcting apparatus

A brief overview of an image correcting apparatus according to a first embodiment will be explained first. The image correcting apparatus to be disclosed in the present invention is arranged in an inside of a digital television and the like and outputs after correction a processing target image to be input. The image correcting apparatus can be applied not only to a digital television but also to one segment (one-segment broadcasting) terminal, a personal computer (PC), an image data relaying device, and the like.
In the above-described configuration, the image correcting apparatus determines whether or not the processing target image is a dark image based on a pixel value of each pixel of the processing target image. When the processing target image is determined to be a dark image, the image correcting apparatus then calculates a distribution balance of a frequency of appearance of pixels in a dark area which indicates an area having a smaller value than a first value in the processing target image as a dark image. Then, the image correcting apparatus determines a correction amount with respect to the processing target image based on the calculated distribution balance. After that, the image correcting apparatus corrects the image by the determined correction amount.
Specifically, the image correcting apparatus calculates a distribution balance of a frequency of appearance of pixels in a dark area when the input processing target image is a dark image. Then, the image correcting apparatus determines that there is a possibility of causing the black defacement phenomenon when the calculated distribution balance of the dark area concentrates in a very dark range, and that there is a possibility of causing the black floating phenomenon when the calculated distribution balance of the dark area concentrates in a slightly dark range. Next, the image correcting apparatus makes a correction after determining a correction amount (a correction curve) according to the processing target image which is determined to have the possibility of causing the black floating phenomenon or the black defacement phenomenon.
As described above, the image correcting apparatus can suppress the black floating phenomenon or the black defacement phenomenon as a result of being able to determine a correction amount with respect to a processing target image according to a distribution balance of a frequency of appearance of pixels in a dark area in the processing target image, compared to the conventional technique in which a correction amount is determined according to the number of pixels in a dark area in an image and an entirety of the dark area in the image is corrected by a definite measure.

Configuration of image correcting apparatus

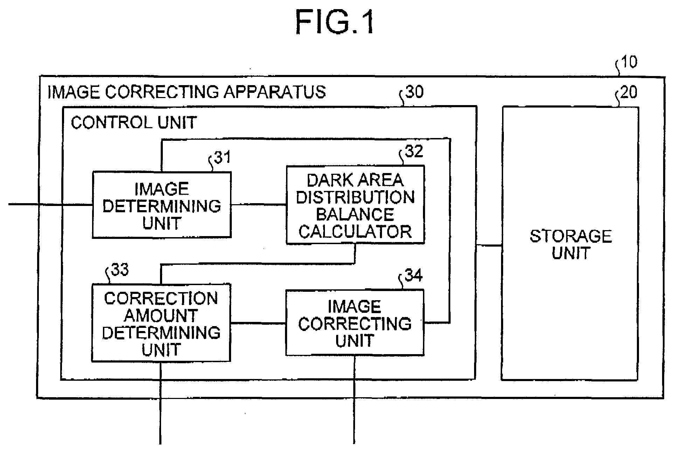

A configuration of the image correcting apparatus according to the first embodiment will be explained next with reference to FIG. 1. FIG. 1 is a view of a configuration of the image correcting apparatus according to the first embodiment. As illustrated in FIG. 1, an image correcting apparatus 10 is provided with a storage unit 20 and a control unit 30 and outputs after correction a processing target image to be input.
The storage unit 20 stores data necessary for various processes performed by the control unit 30 and results of various processes performed by the control unit 30. For example, the storage unit 20 stores a correction curve necessary for an image correcting process performed by the control unit 30 and a result of the image correcting process performed by the control unit 30.

The control unit 30 is specifically provided with, in addition to an internal memory which stores a control program, a program specifying various process procedures, and necessary data, an image determining unit 31, a dark area distribution balance calculator 32, a correction amount determining unit 33, and an image correcting unit 34 and performs various processes by these units.

The image determining unit 31 determines whether or not the processing target image is a dark image based on a pixel value of each pixel of the processing target image. To give a specific example, the image determining unit 31 accepts a processing target image to be input to calculate a histogram of the accepted processing target image. The histogram may be calculated from values for red, green, and blue (RGB) of the processing target image or may be calculated after calculating intensity values from the RGB values of the processing target image.

The image determining unit 31 then calculates an average brightness of an entirety of the processing target image from a brightness indicating a degree of brightness of each pixel of the processing target image by using the calculated histogram. For example, the calculated average brightness becomes low when the distribution balance of the processing target image concentrates in a dark range and becomes high when the distribution balance of the processing target image concentrates in a bright range.

After that, the image determining unit 31 determines whether the calculated average brightness of the entirety of the processing target image is equal to or more than a threshold value "Th1 = 50" or less than the threshold value. The image determining unit 31 then determines that the processing target image is not a dark image when the calculated average brightness is equal to or more than the threshold value and that the processing target image is a dark image when the calculated average brightness is less than the threshold value. Here, the threshold value "Th1" used for determining whether or not the processing target image is a dark image is not limited to "50".

When the processing target image is determined by the image determining unit 31 to be a dark image, the dark area distribution balance calculator 32 calculates a distribution balance of a frequency of appearance of pixels in a dark area indicating an area having a smaller value than the first value in the processing target image as a dark image.

To give a specific example further in the above example, the dark area distribution balance calculator 32, when the processing target image is determined by the image determining unit 31 to be a dark image, divides the dark area indicating an area the brightness of which is lower than the calculated average brightness of the entirety of the processing target image in the processing target image as a dark image and calculates a distribution balance of a frequency of appearance of pixels.

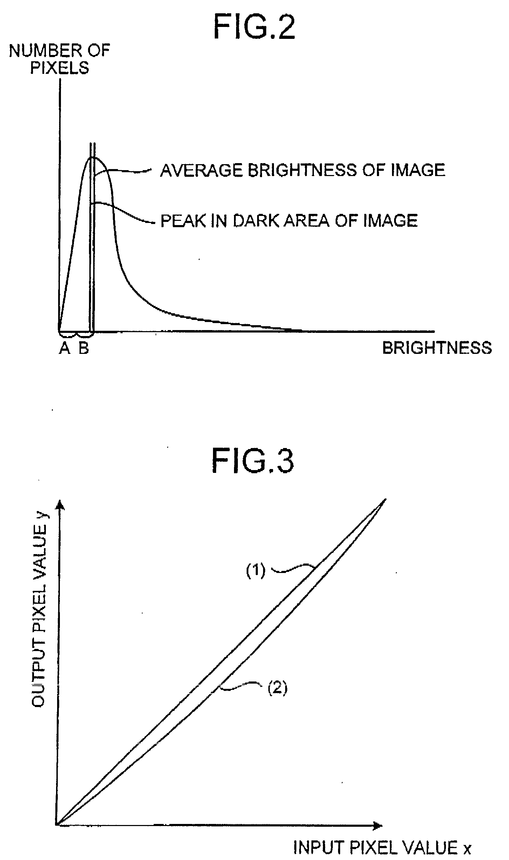

For example, when the brightness and the number of pixels of the processing target image as a dark image are in a relation illustrated in FIG. 2, the dark area distribution balance calculator 32 uses an average brightness adjacent to a peak of the dark area of the processing target image, divides the dark area into "A" and "B" (two parts), and calculate a distribution balance of the number of pixels. FIG. 2 illustrates an example of a relation between the brightness and the number of pixels of the processing target image which is determined to be a dark image.

The correction amount determining unit 33 determines a correction amount with respect to the processing target image based on the distribution balance calculated by the dark area distribution balance calculator 32. Here, a correction curve (correction amount) determined by the correction amount determining unit 33 is stored in the storage unit 20.

To give a specific example further in the above example, the correction amount determining unit 33 compares the distribution balance, calculated by the dark area distribution balance calculator 32, of the number of pixels in the dark area "A" to a threshold value "Th2". Here, while the threshold value 'Th2" is, for example, configured to be a value equivalent to 20% of the number of pixels in the entirety of the processing target image, the value is not limited to the equivalent to 20%.

Then, the correction amount determining unit 33 determines that there is a possibility of causing (in correcting the processing target image in the conventional technique) the black floating phenomenon when the number of pixels of the area "A" which is a very dark area is smaller than the threshold value "Th2". Subsequently, the correction amount determining unit 33, in the case of determining that there is a possibility of causing the black floating phenomenon, determines a correction curve (1) expressed by "y = x" or a correction curve (2) expressed by "expression (1)", which are illustrated in FIG. 3, as a correction amount for the processing target image. Here, FIG. 3 illustrates an example of correction curves to be used when there is a possibility of causing a black floating phenomenon.

$$y = x^{\alpha} \qquad 1.05 \leq \alpha \leq 1.15 \qquad (1)$$

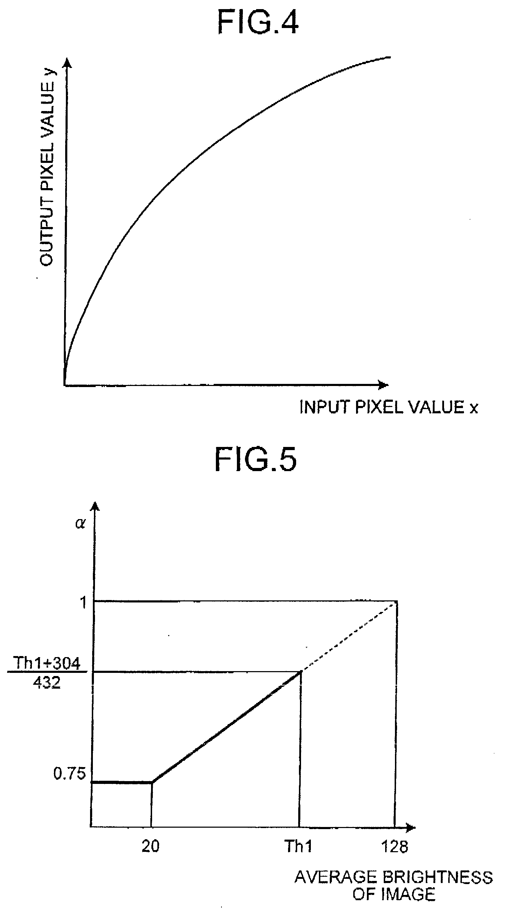

When the number of pixels of the area "A" which is a very dark area is larger than the threshold value "Th2", the correction amount determining unit 33 determines that there is a possibility of causing (in correcting the processing target image in the conventional technique) the black defacement phenomenon. Then, the correction amount determining unit 33, in the case of determining that there is a possibility of causing the black defacement phenomenon, determines a correction curve expressed by "expression (2)", which is illustrated in FIG. 4, as a correction amount for the processing target image. A value for a parameter "α" in expression (2) varies depending on the threshold value "Th1" as illustrated in FIG. 5. Here, FIG. 4 illustrates an example of a correction curve to be used when there is a possibility of causing a black defacement phenomenon and FIG. 5 is a view for explaining a determination of the parameter value α.

$$y = x^{\alpha} \qquad 0.75 \leq \alpha \leq \frac{Th1 + 304}{432} \qquad (2)$$

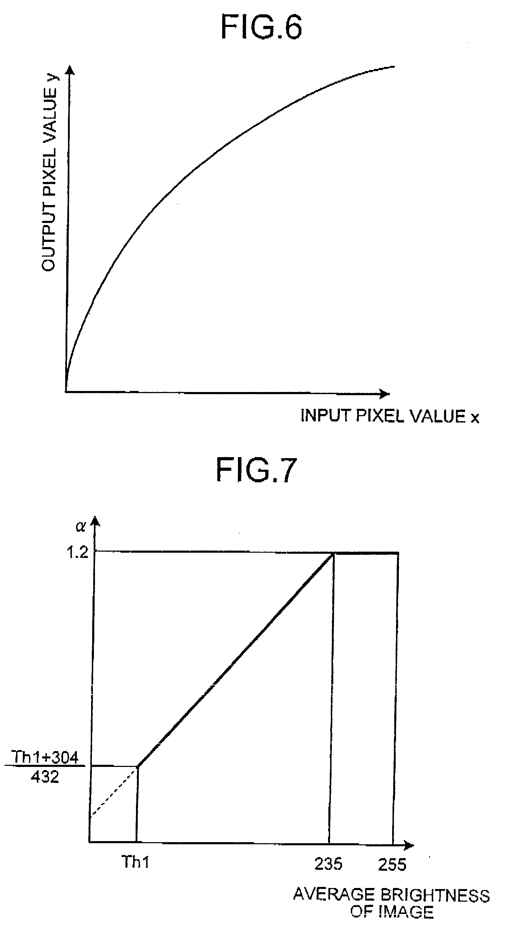

In addition, the correction amount determining unit 33 determines a correction curve expressed by "expression (3)", which is illustrated in FIG. 6, as a correction amount for the processing target image with respect to the processing target image which is determined by the image determining unit 31 to be a normal image (image the average brightness of the entirety of which is higher than the threshold value "Th1"). A value for a parameter "α" in expression (3) varies depending on the threshold value "Th1" as illustrated in FIG. 7. Though the correction curve illustrated in FIG. 6 represents a case of being convex, there is a case of being conclave depending on the value of the parameter "α". Here, FIG. 6 illustrates an example of a correction curve to be used when the processing target image is determined to be a normal image and FIG. 7 is a view for explaining a determination of the parameter value α.

$$y = x^{\alpha} \qquad \frac{Th1 + 304}{432} \leq \alpha \leq 1.2 \qquad (3)$$

To put it simply, the correction amount determining unit 33 makes a correction of the processing target image into a darker image or a slightly brighter image (or makes no correction) in the case of determining that the possibility of causing the black floating phenomenon is present and makes a correction into a brighter image in the case of determining that the possibility of causing the black defacement phenomenon is present. In other words, the correction amount determining unit 33 determines a correction amount (a correction curve) depending on which possibility of causing the black floating phenomenon or the black defacement phenomenon is present in the dark area "A". Here, the determination of the possibility of the black floating phenomenon or the black defacement phenomenon may be made depending on whether or not, based on the calculated distribution balance of the frequency of appearance of the pixels, the pixels concentrate in a very dark range of the dark area of the processing target image without comparing the number of pixels in the dark area "A" to the threshold value "Th2".

The image correcting unit 34 uses the correction amount determined by the correction amount determining unit 33 to correct and output the processing target image. To give a specific example further in the above example, the image correcting unit 34 uses the correction amount for the dark area determined by the correction amount determining unit 33 to correct and output the input processing target image.

Flow of entire process performed by image correcting apparatus

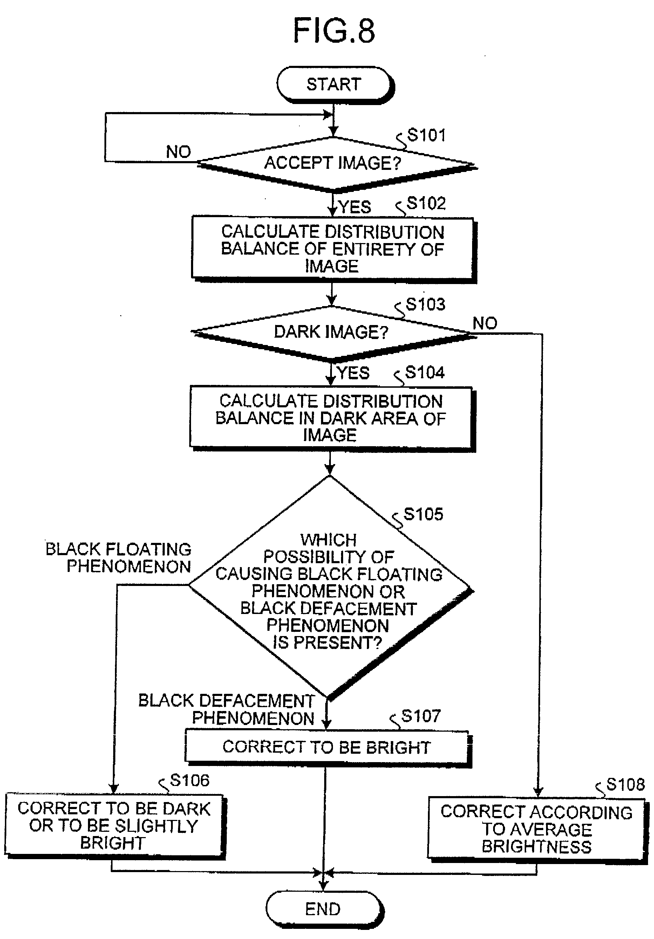

Next, a flow of an entire process performed by the image correcting apparatus 10 according to the first embodiment will be explained with reference to FIG. 8. FIG. 8 is a flowchart for explaining a flow of an entire process performed by the image correcting apparatus 10 according to the first embodiment.

As illustrated in FIG. 8, the image correcting apparatus 10, when accepting a processing target image ("Yes" in step S101), calculates a histogram of the accepted processing target image. The image correcting apparatus 10 then uses the calculated histogram to calculate an average brightness of the entirety of the processing target image from a brightness indicating a degree of brightness of each pixel of the processing target image (step S102).

Subsequently, the image correcting apparatus 10 determines whether the calculated average brightness of the entirety of the processing target image is equal to or more than the threshold value "Th1 = 50" or less than the threshold value (step s103). After that, the image correcting apparatus 10 determines that the processing target image is not a dark image ("No" at step S103) when the calculated average brightness is equal to or more than the threshold value, and that the processing target image is a dark image ("Yes" at step S103) when the calculated average brightness is less than the threshold value.

When the processing target image is determined to be a dark image ("Yes" at step S103), the image correcting apparatus 10 divides the dark area indicating an area lower than the calculated average brightness of the entirety of the processing target image in the processing target image as a dark image to calculate a distribution balance of a frequency of appearance of pixels (step S104). Here, an average brightness adjacent to a peak of the dark area of the processing target image is used to divide the dark area into a range "A" which is very dark area and a range "B" which is a slightly dark area.

The image correcting apparatus then compares the calculated distribution balance of pixels in the dark area "A" to the threshold value "Th2". After that, the image correcting apparatus 10 determines that there is a possibility of causing the black floating phenomenon when the number of pixels of the very dark area "A" is smaller than the threshold value "Th2" ("BLACK FLOATING PHENOMENON" at step S105). Then, the image correcting apparatus 10 determines the correction curve (1) or the correction curve (2) illustrated in FIG. 3 as a correction amount for the processing target image and performs a correction when the possibility of causing the black floating phenomenon is determined to be present (step S106).

Besides, when the number of the very dark area "A" is larger than the threshold value "Th2", the image correcting apparatus determines that there is a possibility of causing the black defacement phenomenon ("BLACK DEFACEMENET PHENOMENON" at step S105). After that, the image correcting apparatus 10 determines the correction curve illustrated in FIG. 4 as a correction amount for the processing target image and performs a correction when the possibility of causing the black defacement phenomenon is determined to be present (step S107).

When the average brightness of the entirety of the processing target image is higher than the threshold value "Th1" and the processing target image is determined not to be a dark image ("No" at step S103), the image correcting apparatus 10 determines the correction curve illustrated in FIG. 6 as a correction amount for the processing target image and performs a correction (step S108).

Advantages of First Embodiment

As described above, the black floating phenomenon or the black defacement phenomenon can be suppressed since the image correcting apparatus 10 determines a correction amount for the processing target image based on the distribution balance of a frequency of appearance of pixels in the dark area of the processing target image.

For example, the image correcting apparatus 10, when accepting a processing target image, calculates a histogram of the accepted processing target image. Then, the image correcting apparatus 10 calculates an average brightness of an entirety of the processing target image from a brightness indicating a degree of brightness of each pixel of the processing target image by using the calculated histogram. Subsequently, the image correcting apparatus 10 determines whether the calculated average brightness of the entirety of the processing target image is equal to or more than the threshold value "Th1 = 50" or less than the threshold value. After that, the image correcting apparatus 10 determines that the processing target image is a dark image when the calculated average brightness is less than the threshold value. When the processing target image is determined to be a dark image, the image correcting apparatus 10 divides, into a range "A" which is a very dark area and a range "B" which is a slightly dark area, the dark area indicating an area lower than the calculated average brightness of the entirety of the processing target image in the processing target image as a dark image and calculates a distribution balance of a frequency of appearance of pixels. Next, the image correcting apparatus 10 compares the calculated distribution balance of the frequency of appearance of pixels in the dark area "A" to the threshold value "Th2" (the value is equivalent to 20% of the number of pixels of the entirety of the processing target image, for example). After that, when the number of pixels of the very dark area "A" is smaller than the threshold value "Th2", the image correcting apparatus 10 determines that there is a possibility of causing the black floating phenomenon, determines a correction amount, and makes a correction by using the determined correction amount. When the number of pixels of the very dark area "A" is larger than the threshold value "Th2", the image correcting apparatus 10 determines that there is a possibility of causing the black defacement phenomenon, determines a correction amount, and makes a correction by using the determined correction amount. As. a result, the image correcting apparatus 10 can suppress the black floating phenomenon or the black defacement phenomenon.

Moreover, the image correcting apparatus 10 can make a correction at high speed, at low cost, and with a high degree of accuracy since the image correcting apparatus 10 uses values which can be easily obtained from the processing target image and especially determines a correction amount for a dark area of a dark image.

Second Embodiment

While the case of using an average brightness, adjacent to a peak in a dark area of an image, of an entirety of a processing target image and calculating a distribution balance of a frequency of appearance of pixels is explained in the first embodiment described above, the present invention is not limited thereto and a value obtained by multiplying the average brightness of the entirety of the processing target image by a coefficient can be used to calculate a distribution balance of a frequency of appearance of pixels.

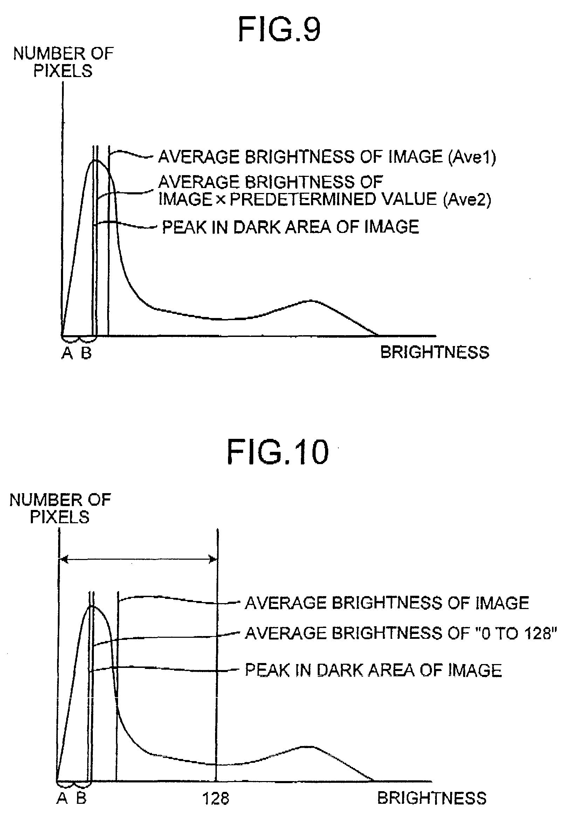

In a second embodiment below, an example of calculating a peak of a dark area in an image by using a coefficient will be explained with reference to FIG. 9. FIG. 9 is a view for explaining the example of calculating a peak of a dark area in an image by using a coefficient. Here, since each constituent and a part of functions of an image correcting apparatus 10 according to the second embodiment are the same as those in the first embodiment, the explanation for them will be omitted and a process, different from the first embodiment, of calculating a peak of a dark area in an image will be explained specifically.

Process of calculating peak of dark area of image according to Second Embodiment

As illustrated in FIG. 9, the image correcting apparatus 10 calculates an average brightness "Ave1" of the entirety of the processing target image. The image correcting apparatus 10 multiplies the calculated average brightness "Ave1" by a coefficient "0.8" to calculate a peak "Ave2" of the dark area of the image. After that, the image correcting apparatus 10 uses the calculated peak "Ave2" to calculate a distribution balance of a frequency of appearance of pixels through a division of a dark area into "A" and "B".

In other words, since a value of the average brightness becomes larger than the processing target image in FIG. 2 when pixels do not concentrate only in the dark range as illustrated in FIG. 9 even though the processing target image is a dark image, the image correcting apparatus 10 performs a process of multiplying the average brightness by the coefficient to approximate the peak of the dark area of the image. Examples of a dark image in which pixels do not concentrate only in the dark range may include an image of a firework captured at night.

Advantages of Second Embodiment

As described above, the image correcting apparatus 10 can make a correction for reproducing shades of black with respect to the processing target image with a high degree of accuracy since the image correcting apparatus 10 performs the process of making the average brightness of the entirety of the processing target image approximate the peak in the dark area in the case of a dark image in which pixels do not concentrate only in the dark range.

In other words, the image correcting apparatus 10 can extract a range of a dark area (peak of a dark area) accurately and make a correction with a high degree of accuracy by multiplying the average brightness of the entirety of the processing target image by the coefficient in correcting the dark area of the processing target image.

Third Embodiment

While the case of calculating a distribution balance of a frequency of appearance of pixels by using an average brightness, adjacent to a peak in a dark area of an image, of an entirety of a processing target image is explained in the first embodiment, the present invention is not limited thereto and a distribution balance of a frequency of appearance of pixels can be calculated by using an average brightness of an area remained after excluding a pixel having a large pixel value.

So, an example of calculating a peak in a dark area of an image by using an average brightness of an area remained after excluding a pixel having a large pixel value will be explained in a third embodiment below with reference to FIG. 10. FIG. 10 is a view for explaining the example of calculating a peak in a dark area of an image by using an average brightness of an area remained after excluding a pixel having a large pixel value. Here, since each constituent and a part of functions of an image correcting apparatus 10 according to the third embodiment are the same as those in the first embodiment, the explanation for them will be omitted and a process, different from the first embodiment, of calculating a peak in a dark area of an image will be explained specifically.

Process of calculating peak of dark area of image according to Third Embodiment

As illustrated in FIG. 10, the image correcting apparatus 10 calculates an average brightness of pixel values (brightness) "0 to 128" of the processing target image. The image correcting apparatus 10 then uses the calculated average brightness of the "0 to 128" to calculate a distribution balance of a frequency of appearance of pixels through a division of a dark area into "A" and "B"

In other words, since a value of the average brightness becomes larger than the processing target image in FIG. 2 when pixels do not concentrate only in a dark range as illustrated in FIG. 10 even though the processing target image is a dark image, the image correcting apparatus 10 performs a process of calculating an average brightness of an area remained after excluding a pixel in a bright area. Here, the pixel values to be used are not limited to "0 to 128".

Advantages of Third Embodiment

As described above, the image correcting apparatus 10 can make a correction for reproducing shades of black in the processing target image with a higher degree of accuracy since the image correcting apparatus 10 accurately extracts a range of a dark area which is especially of significance in an image correction in the case of a dark image in which pixels do not concentrate only in a dark range.

In other words, the image correcting apparatus 10 can extract a range of a dark area (peak of a dark area) remained after excluding a bright area in the processing target image for reproducing shades of black which is of significance in an image correction and thereby can make a correction irrespective of characteristics (for example, pixels are present in bright range and so on) of an image as long as a processing target image is determined to be a dark image.

Fourth Embodiment

While the case of calculating a distribution balance of a frequency of appearance of pixels by dividing a dark area of a processing target image into "A" and "B" (two equal parts) is explained in the first embodiment described above, the present invention is not limited thereto and a distribution balance can be calculated depending on a ratio of the number of pixels after the division of the dark area of the processing target image into "A" and "B".

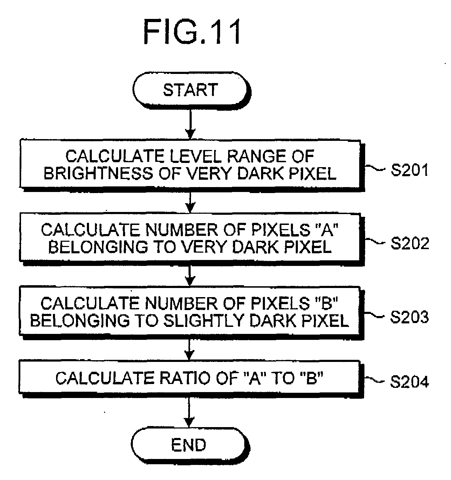

A process of calculating a distribution balance of a dark area by using a ratio will be explained in a fourth embodiment below with reference to FIG. 11. FIG. 11 is a flowchart for explaining a flow of a process of calculating a distribution balance in a dark area by using a ratio. Here, since each constituent and a part of functions of an image correcting apparatus 10 according to the fourth embodiment are the same as those in the first embodiment, the explanation for them will be omitted and a process, different from the first embodiment, of calculating a distribution balance in a dark area will be explained specifically.

Calculation of distribution balance in dark area of image according to Fourth Embodiment

As illustrated in FIG. 11, the image correcting apparatus 10 calculates a level range of a brightness of a very dark pixel (dark area) of the processing target image by using the calculated average brightness of the entirety of the processing target image (step S201). The image correcting apparatus 10 then divides the calculated dark area into a very dark area "A" and a slightly dark area "B" and calculates the number of pixels in the dark area "A" and the number of pixels in the dark area "B" (step S202 and step S203).

Subsequently, the image correcting apparatus 10 calculates a ratio of the calculated number of pixels in the dark area "A" to the calculated number of pixels in the dark area "B" (step S204) and calculates a distribution balance of a frequency of appearance of pixels with respect to the dark area of the processing target image. After that, the image correcting apparatus 10 having calculated the distribution balance by using the ratio determines that there is a possibility of causing the black defacement phenomenon when the ratio of the dark area "A" is higher than that of the dark area "B" and determines that there is a possibility of causing the black floating phenomenon when the ratio of the dark area "A" is lower than that of the dark area "B".

Here, as for the calculation of a peak in a dark area of an image, a value obtained by multiplying an average brightness by a coefficient may be used similarly to the second embodiment and an average brightness of an area remained after excluding a pixel having a large pixel value may be used similarly to the third embodiment instead of an average brightness of an entirety of a processing target image.

Advantages of Fourth Embodiment

As described above, the image correcting apparatus 10 can determine a correction amount of a processing target image by using a ratio of a distribution balance in a dark area when the processing target image is determined to be a dark image.

Fifth Embodiment

While embodiments of the present invention are explained so far, the present invention may be realized in various different forms except for the above-described embodiments. So, a different embodiment will be explained separately for each of (1) amount of statistics used for image determining process, (2) number of division of dark area, (3) calculation of distribution balance of dark area, (4) system configuration, and (5) program.

(1) Amount of statistics used for image determining process

While the case of determining whether or not the processing target image is a dark image from the average brightness of the entirety of the processing target image is explained in the first to fourth embodiments described above, the present invention is not limited thereto and whether or not the processing target image is a dark image can be determined from an amount of statistics of an overall distribution balance of the processing target image.

For example, the image correcting apparatus 10 calculates an amount of statistics of an overall distribution balance such as a mode value and a variance value of pixels of the entirety of the processing target image to determine whether or not the processing target image is a dark image. In other words, the amount of statistics used for the determination of whether or not the processing target image is a dark image may be, without being limited to the average brightness of the entirety of the processing target image, anything which indicates a degree of brightness of the entirety of the processing target image.

(2) Number of division of dark area

Besides, while the case of calculating a distribution balance by dividing a dark area of the processing target image into a very dark area "A" and a slightly dark area "B" is explained in the first to fourth embodiments described above, the present invention is not limited thereto and a distribution balance can be calculated via a division into a plurality of areas more than two.

For example, the image correcting apparatus 10 calculates a distribution balance by dividing a dark area of the processing target image into three, four, or the like. In other words, the image correcting apparatus 10 can make a correction of a dark area of the processing target image with a higher degree of accuracy since the image correcting apparatus 10 calculates a distribution balance by dividing the dark area of the processing target image into a plurality of areas.

(3) Calculation of distribution balance of dark area

While the case of using a frequency of appearance of pixels or a ratio of the number of pixels in the calculation of a distribution balance of a dark area of a processing target image is explained in the first to fourth embodiments described above, the present invention is not limited thereto and an index which mathematically indicates a distribution can also be used.

For example, the image correcting apparatus 10 calculates a distribution balance of a dark area of the processing target image by using a "skewness" or a variance value for calculating characteristics based on an average deviation of the entirety of the processing target image. In other words, the calculation used for a distribution balance of a dark area may be, without being limited to an absolute value, a ratio, and the like of a dark area of the processing target image, any amount of statistics which indicate a degree of the number of pixels in the dark area of the processing target image.

(4) System configuration

The process procedure, the control procedure, the specific name, the information (the correction curve and the like kept in the storage unit 20 illustrated in FIG. 1, for example) including various types of data and parameters described above or illustrated in the drawings can be arbitrarily modified unless otherwise specified.

Besides, constituents of each device illustrated are only exemplary and explanatory on a functional and conceptual basis, and are not necessarily required to be configured physically as illustrated. In other words, a specific disintegration/integration of each device is not limited to the illustrated modes and all or a part thereof can be configured by functionally or physically applying disintegration/integration in a given unit according to load of various kinds, a status of use, and the like; for example, the correction amount determining unit 33 and the image correcting unit 34 are integrated as an "image correcting unit" which determines a correction amount with respect to the processing target image and outputs after making a correction by using the determined correction amount. Moreover, all or a part of each processing function performed by each device may be realized by a CPU and a program analyzed and executed by the CPU, or may be realized as a hardware of a wired logic.

(5) Program

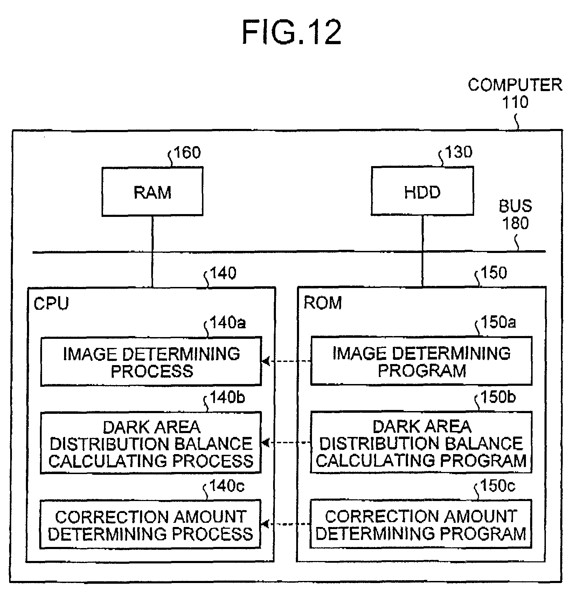

While the case of realizing various types of processes by hardware logic is explained in the embodiments described above, the present invention is not limited thereto and the processes may be realized by making a computer execute a program prepared in advance. Then, an example of a computer which executes an image correcting program having functions similar to the image correcting apparatus 10 explained in the above-described embodiments will be explained below with reference to FIG. 12. FIG. 12 illustrates a computer which executes an image correcting program.

As illustrated in FIG. 12, a computer 110 as an image correcting apparatus is connected to a hard disk drive (HDD) 130, a central processing unit (CPU) 140, a read-only memory (ROM) 150, and a random access memory (RAM) 160 via a bus 180 and the like.

In the ROM 150, an image correcting program which exercises functions similar to the image correcting apparatus 10 illustrated in the first embodiment described above, i.e., an image determining program 150a, a dark area distribution balance calculating program 150b, and a correction amount determining program 150c are stored in advance as illustrated in FIG. 12. Here, the programs 150a to 150c may be arbitrarily integrated or disintegrated similarly to each constituent of the image correcting apparatus 10 illustrated in FIG. 1.

The CPU 140 reads out from the ROM 150 and executes the programs 150a to 150c, so that the programs 150a to 150c come to function respectively as an image determining process 140a, a dark area distribution balance calculating process 140b, and a correction amount determining process 140c as illustrated in FIG. 12. Here, the processes 140a to 140c correspond to the image determining unit 31, the dark area distribution balance calculator 32, and the correction amount determining unit 33 illustrated in FIG. 1, respectively.

Then, the CPU 140 executes the image correcting program based on the data recorded in the RAM 160.

Here, each of the programs 150a to 150c described above is not necessarily required to be stored in the ROM 150 from the beginning and may be stored in "portable physical media" to be inserted into the computer 110 such as a flexible disk (FD), a CD-ROM, a DVD, an optical magnetic disk, and an IC card; "fixed physical media" such as a HDD provided in an inside or an outside of the computer 110; and "other computers (or a server)" to be connected to the computer 110 via a public line, the Internet, a LAN, a WAN, and the like, and the computer 110 may reads out therefrom and executes each of the programs.

**Claims**

1. An image correcting apparatus (10), comprising:

   an image determining unit (31) operable to determine based on a pixel value of each pixel of a processing target image whether or not the processing target image is a dark image;
   a dark area distribution balance calculator (32) operable to calculate, when the processing target image is determined by the image determining unit to be the dark image, a distribution balance of a frequency of appearance of pixels in a dark area of the processing target image, the dark area being an area where the pixels have a smaller pixel value than a first value, divide the dark area of the processing target image into a very dark area and a slightly dark area using an average brightness adjacent to a peak of the dark area, and calculate a distribution balance of a frequency of appearance of pixels in the very dark area based on the number of pixels; and
   a correction amount determining unit (33) operable to determine a correction amount with respect to the processing target image based on the distribution balance calculated by the dark area distribution balance calculator.

2. The image correcting apparatus (10) according to claim 1, further comprising an image correcting unit (34) operable to correct the processing target image by using the correction amount determined by the correction amount determining unit and outputs a corrected processing target image.

3. The image correcting apparatus (10) according to claim 1, wherein the image determining unit (31) is operable to calculate an average brightness of an entirety of the processing target image from a brightness indicating a degree of brightness of each pixel of the processing target image and determine whether or not the processing target image is the dark image depending on whether the average brightness is not less than a threshold value or not more than the threshold value.

4. The image correcting apparatus (10) according to claim 1, wherein the first value is an average brightness of an entirety of the processing target image.

5. The image correcting apparatus (10) according to claim 1, wherein the first value is a product obtained by multiplying an average brightness of an entirety of the processing target image by a coefficient.

6. The image correcting apparatus (10) according to claim 1, wherein the first value is an average brightness of an area remained after excluding a pixel having a high pixel value in the processing target image.

7. The image correcting apparatus (10) according to claim 1, wherein
based on the distribution balance calculated by the dark area distribution balance calculator (32) for each of the plurality of areas, the correction amount determining unit (33) is operable to determine a correction amount for making a correction to be bright when the distribution balance concentrates a dark range of the dark area and determines a correction amount for making a correction to be dark when the distribution balance concentrates in a bright range of the dark area.

8. The image correcting apparatus (10) according to claim 1, wherein
the correction amount determining unit (33) is operable to determine the correction amount based on whether or not the distribution balance calculated by the dark area distribution balance calculator (32) for each of the plurality of areas is larger than a second value.

9. The image correcting apparatus (10) according to claim 8, wherein the correction amount determining unit (33) is operable to determine a correction amount for making a correction to be bright when the distribution balance calculated by the dark area distribution balance calculator (32) in a dark range of the dark area is not less than the second value, and determine a correction amount for making a correction to be dark when the distribution balance calculated by the dark area distribution balance calculator in the dark range of the dark area is not more than the second value.

10. The image correcting apparatus (10) according to claim 1, wherein the correction amount determining unit (33) is operable to determine the correction amount depending on a ratio of the number of pixels in one of the plurality of areas to that in another.

11. An image correcting program causing a computer to execute:

an image determining step of determining, based on a pixel value of each pixel of a processing target image, whether or not the processing target image is a dark image;
a dark-area distribution balance calculating step of calculating, when the processing target image is determined at the determining to be the dark image, a distribution balance of a frequency of appearance of pixels in a dark area of the processing target image, the dark area being an area where the pixels have a smaller pixel value than a first value, dividing the dark area of the processing target image into a very dark area and a slightly dark area using an average brightness adjacent to a peak of the dark area, and calculating a distribution balance of a frequency of appearance of pixels in the very dark area based on the number of pixels; and
a correction amount determining step of determining a correction amount with respect to the processing target image based on the distribution balance calculated at the dark-area distribution balance calculating step.

12. An image correcting method executed by a computer, comprising:

an image determining step of determining, based on a pixel value of each pixel of a processing target image, whether or not the processing target image is a dark image;
a dark-area distribution balance calculating step of calculating, when the processing target image is determined at the determining to be the dark image, a distribution balance of a frequency of appearance of pixels in a dark area of the processing target image, the dark area being an area where the pixels have a smaller pixel value than a first value, dividing the dark area of the processing target image into a very dark area and a slightly dark area using an average brightness adjacent to a peak of the dark area, and calculating a distribution balance of a frequency of appearance of pixels in the very dark area based on the number of pixels; and
a correction amount determining step of determining a correction amount with respect to the processing target image based on the distribution balance calculated at the dark-area distribution balance calculating step.

**Patentansprüche**

1. Bildkorrekturgerät (10), das Folgendes umfasst:

eine Bildbestimmungseinheit (31), die betrieben werden kann, um basierend auf einem Pixelwert jedes Pixels eines Verarbeitungszielbilds zu bestimmen, ob das Verarbeitungszielbild ein dunkles Bild ist oder nicht,
einen Dunkelbereich-Verteilungsgleichgewichtsrechner (32), der betrieben werden kann, um, wenn das Verarbeitungszielbild von der Bildbestimmungseinheit als das dunkle Bild bestimmt wird, ein Verteilungsgleichgewicht einer Frequenz des Auftretens von Pixeln in einem dunklen Bereich des Verarbeitungszielbilds zu berechnen, wobei der Dunkelbereich ein Bereich ist, in dem die Pixel einen kleineren Pixelwert als ein erster Wert haben, den Dunkelbereich des Verarbeitungszielbilds in einen sehr dunklen Bereich und einen leicht dunklen Bereich zu trennen, indem eine mittlere Helligkeit benachbart zu einer Spitze des Dunkelbereichs verwendet wird, und ein Verteilungsgleichgewicht einer Frequenz des Auftretens von Pixeln in dem sehr dunklen Bereich basierend auf der Anzahl von Pixeln zu berechnen, und
eine Korrekturmengenbestimmungseinheit (33), die betrieben werden kann, um eine Korrekturmenge in Bezug auf das Verarbeitungszielbild basierend auf dem Verteilungsgleichgewicht, das durch den Dunkelbereich-Verteilungsgleichgewichtsrechner berechnet wurde, zu bestimmen.

2. Bildkorrekturgerät (10) nach Anspruch 1, das ferner eine Bildkorrektureinheit (34) umfasst, die betrieben werden kann, um das Verarbeitungszielbild durch Verwenden der Korrekturmenge, die durch die Korrekturmengenbestimmungseinheit bestimmt wurde, zu korrigieren und ein korrigiertes Verarbeitungszielbild auszugeben.

3. Bildkorrekturgerät (10) nach Anspruch 1, wobei die Bildbestimmungseinheit (31) betrieben werden kann, um eine mittlere Helligkeit des gesamten Verarbeitungszielbilds aus einer Helligkeit zu berechnen, die einen Helligkeitsgrad jedes Pixels des Verarbeitungszielbilds angibt, und in Abhängigkeit davon, ob die mittlere Helligkeit nicht geringer ist als ein Schwellenwert oder nicht mehr ist als der Schwellenwert, zu bestimmen, ob das Verarbeitungszielbild das dunkle Bild ist oder nicht.

4. Bildkorrekturgerät (10) nach Anspruch 1, wobei der erste Wert eine mittlere Helligkeit eines gesamten Verarbeitungszielbilds ist.

5. Bildkorrekturgerät (10) nach Anspruch 1, wobei der erste Wert ein Produkt ist, das durch Multiplizieren einer mittleren Helligkeit eines gesamten Verarbeitungszielbilds mit einem Koeffizienten erhalten wird.

6. Bildkorrekturgerät (10) nach Anspruch 1, wobei der erste Wert eine mittlere Helligkeit eines Bereichs ist, der verbleibt, nachdem in dem Verarbeitungszielbild ein Pixel, das einen hohen Pixelwert hat, ausgeschlossen wurde.

7. Bildkorrekturgerät (10) nach Anspruch 1, wobei basierend auf dem Verteilungsgleichgewicht, das durch den Dunkelbereich-Verteilungsgleichgewichtsrechner (32) für jeden der Mehrzahl von Bereichen berechnet wird, die Korrekturmengenbestimmungseinheit (33) betrieben werden kann, um eine Korrekturmenge zu bestimmen, um eine Korrektur hell zu machen, wenn das Verteilungsgleichgewicht einen Dunkelbereich des Dunkelbereichs konzentriert, und eine Korrekturmenge zu bestimmen, um eine Korrektur dunkel zu machen, wenn sich das Verteilungsgleichgewicht in einem hellen Bereich des Dunkelbereichs konzentriert.

8. Bildkorrekturgerät (10) nach Anspruch 1, wobei
die Korrekturmengenbestimmungseinheit (33) betrieben werden kann, um die Korrekturmenge basierend darauf zu bestimmen, ob das Verteilungsgleichgewicht, das durch den Dunkelbereich-Verteilungsgleichgewichtsrechner (32) für jeden der Mehrzahl von Bereichen berechnet wird, größer ist als ein zweiter Wert.

9. Bildkorrekturgerät (10) nach Anspruch 8, wobei die Korrekturmengenbestimmungseinheit (33) betrieben werden kann, um eine Korrekturmenge zu bestimmen, um eine Korrektur hell zu machen, wenn das Verteilungsgleichgewicht, das durch den Dunkelbereich-Verteilungsgleichgewichtsrechner (32) in einem Dunkelbereich des Dunkelbereichs berechnet wird, nicht geringer ist als der zweite Wert, und eine Korrekturmenge zu bestimmen, um eine Korrektur dunkel zu machen, wenn das Verteilungsgleichgewicht, das von dem Dunkelbereich-Verteilungsgleichgewichtsrechner in dem Dunkelbereich des Dunkelbereichs berechnet wird, nicht mehr als der zweite Wert ist.

10. Bildkorrekturgerät (10) nach Anspruch 1, wobei die Korrekturmengenbestimmungseinheit (33) betrieben werden kann, um die Korrekturmenge in Abhängigkeit von einem Verhältnis der Anzahl von Pixeln in einem der Mehrzahl von Bereichen zu der in einem anderen zu bestimmen.

11. Bildkorrekturprogramm, das einen Computer veranlasst, Folgendes auszuführen:

einen Bildbestimmungsschritt, um basierend auf einem Pixelwert jedes Pixels eines Verarbeitungszielbilds zu bestimmen, ob das Verarbeitungszielbild ein dunkles Bild ist oder nicht,
einen Dunkelbereich-Verteilungsgleichgewichts-Rechenschritt, um, wenn das Verarbeitungszielbild bei dem Bestimmen als das dunkle Bild bestimmt wird, ein Verteilungsgleichgewicht einer Frequenz des Auftretens von Pixeln in einem Dunkelbereich des Verarbeitungszielbilds zu berechnen, wobei der Dunkelbereich ein Bereich ist, in dem die Pixel einen kleineren Pixelwert als ein erster Wert haben, den Dunkelbereich des Verarbeitungszielbilds in einen sehr dunklen Bereich und einen leicht dunklen Bereich zu teilen, indem eine mittlere Helligkeit benachbart zu einer Spitze des Dunkelbereichs verwendet wird, und ein Verteilungsgleichgewicht einer Frequenz des Auftretens von Pixeln in dem sehr dunklen Bereich basierend auf der Anzahl von Pixeln zu berechnen, und

einen Korrekturmengenbestimmungsschritt zum Bestimmen einer Korrekturmenge in Bezug auf das Verarbeitungszielbild, basierend auf dem Verteilungsgleichgewicht, das bei dem Dunkelbereich-Verteilungsgleichgewichts-Rechenschritt berechnet wurde.

12. Bildkorrekturverfahren, das von einem Rechner ausgeführt wird, das Folgendes umfasst:

einen Bildbestimmungsschritt, um basierend auf einem Pixelwert jedes Pixels eines Verarbeitungszielbilds zu bestimmen, ob das Verarbeitungszielbild ein dunkles Bild ist oder nicht,

einen Dunkelbereich-Verteilungsgleichgewichts-Rechenschritt um, wenn das Verarbeitungszielbild bei dem Bestimmen als das dunkle Bild bestimmt wird, ein Verteilungsgleichgewicht einer Frequenz des Auftretens von Pixeln in einem Dunkelbereich des Verarbeitungszielbilds zu berechnen, wobei der Dunkelbereich ein Bereich ist, in dem die Pixel einen kleineren Pixelwert als einen ersten Wert haben, den Dunkelbereich des Verarbeitungszielbilds in einen sehr dunklen Bereich und einen leicht dunklen Bereich unter Verwenden einer mittleren Helligkeit benachbart zu einer Spitze des Dunkelbereichs zu teilen, und ein Verteilungsgleichgewicht einer Frequenz des Auftretens von Pixeln in dem sehr dunklen Bereich basierend auf der Anzahl von Pixeln zu berechnen, und

einen Korrekturmengen-Bestimmungsschritt, um eine Korrekturmenge in Bezug auf das Verarbeitungszielbild basierend auf dem Verteilungsgleichgewicht, das bei dem Dunkelbereich-Verteilungsgleichgewichts-Rechenschritt berechnet wurde, zu bestimmen.

## Revendications

1. Appareil de correction d'image (10), comprenant :

une unité de détermination d'image (31) exploitable de manière à déterminer, sur la base d'une valeur de pixel de chaque pixel d'une image cible de traitement, si l'image cible de traitement correspond ou non à une image sombre ;

un calculateur d'équilibre de répartition de zone sombre (32) exploitable de manière à calculer, lorsque l'image cible de traitement est déterminée par l'unité de détermination d'image comme étant l'image sombre, un équilibre de répartition d'une fréquence d'apparence de pixels dans une zone sombre de l'image cible de traitement, la zone sombre correspondant à une zone où les pixels présentent une valeur de pixel inférieure à une première valeur, à diviser la zone sombre de l'image cible de traitement en une zone très sombre et une zone légèrement sombre, en utilisant une luminosité moyenne adjacente à une crête de la zone sombre, et à calculer un équilibre de répartition d'une fréquence d'apparence de pixels dans la zone très sombre, sur la base du nombre de pixels ; et

une unité de détermination de quantité de correction (33) exploitable de manière à déterminer une quantité de correction relativement à l'image cible de traitement, sur la base de l'équilibre de répartition calculé par le calculateur d'équilibre de répartition de zone sombre.

2. Appareil de correction d'image (10) selon la revendication 1, comprenant en outre une unité de correction d'image (34) exploitable de manière à corriger l'image cible de traitement en utilisant la quantité de correction déterminée par l'unité de détermination de quantité de correction, et à générer en sortie une image cible de traitement corrigée.

3. Appareil de correction d'image (10) selon la revendication 1, dans lequel l'unité de détermination d'image (31) est exploitable de manière à calculer une luminosité moyenne d'une intégralité de l'image cible de traitement à partir d'une luminosité indiquant un degré de luminosité de chaque pixel de l'image cible de traitement, et à déterminer si l'image cible de traitement correspond ou non à l'image sombre, selon que la luminosité moyenne n'est pas inférieure à une valeur de seuil ou n'est pas supérieure à la valeur de seuil.

4. Appareil de correction d'image (10) selon la revendication 1, dans lequel la première valeur est une luminosité moyenne d'une intégralité de l'image cible de traitement.

**5.** Appareil de correction d'image (10) selon la revendication 1, dans lequel la première valeur est un produit obtenu en multipliant une luminosité moyenne d'une intégralité de l'image cible de traitement par un coefficient.

**6.** Appareil de correction d'image (10) selon la revendication 1, dans lequel la première valeur est une luminosité moyenne d'une zone restant suite à l'exclusion d'un pixel présentant une valeur de pixel élevée dans l'image cible de traitement.

**7.** Appareil de correction d'image (10) selon la revendication 1, dans lequel, sur la base de l'équilibre de répartition calculé par le calculateur d'équilibre de répartition de zone sombre (32) pour chacune de la pluralité de zones, l'unité de détermination de quantité de correction (33) est exploitable de manière à déterminer une quantité de correction, en vue de réaliser une correction, comme étant claire, lorsque l'équilibre de répartition se concentre dans une plage sombre de la zone sombre, et à déterminer une quantité de correction, en vue de réaliser une correction, comme étant sombre, lorsque l'équilibre de répartition se concentre dans une plage claire de la zone sombre.

**8.** Appareil de correction d'image (10) selon la revendication 1, dans lequel l'unité de détermination de quantité de correction (33) est exploitable de manière à déterminer la quantité de correction selon que l'équilibre de répartition calculé par le calculateur d'équilibre de répartition de zone sombre (32) pour chaque zone de la pluralité de zones est ou non supérieur à une seconde valeur.

**9.** Appareil de correction d'image (10) selon la revendication 8, dans lequel l'unité de détermination de quantité de correction (33) est exploitable de manière à déterminer une quantité de correction, en vue de réaliser une correction, comme étant claire, lorsque l'équilibre de répartition calculé par le calculateur d'équilibre de répartition de zone sombre (32) dans une plage sombre de la zone sombre n'est pas inférieur à la seconde valeur, et à déterminer une quantité de correction, en vue de réaliser une correction, comme étant sombre, lorsque l'équilibre de répartition calculé par le calculateur d'équilibre de répartition de zone sombre dans la plage sombre de la zone sombre n'est pas supérieur à la seconde valeur.

**10.** Appareil de correction d'image (10) selon la revendication 1, dans lequel l'unité de détermination de quantité de correction (33) est exploitable de manière à déterminer la quantité de correction en fonction d'un rapport entre le nombre de pixels dans l'une de la pluralité de zones et celui dans une autre.

**11.** Programme de correction d'image amenant un ordinateur à exécuter :

une étape de détermination d'image consistant à déterminer, sur la base d'une valeur de pixel de chaque pixel d'une image cible de traitement, si l'image cible de traitement correspond ou non à une image sombre ;
une étape de calcul d'équilibre de répartition de zone sombre consistant à calculer, lorsque l'image cible de traitement est déterminée, au cours de l'étape de détermination, comme étant l'image sombre, un équilibre de répartition d'une fréquence d'apparence de pixels dans une zone sombre de l'image cible de traitement, la zone sombre correspondant à une zone où les pixels présentent une valeur de pixel inférieure à une première valeur, à diviser la zone sombre de l'image cible de traitement en une zone très sombre et une zone légèrement sombre, en utilisant une luminosité moyenne adjacente à une crête de la zone sombre, et à calculer un équilibre de répartition d'une fréquence d'apparence de pixels dans la zone très sombre, sur la base du nombre de pixels ; et
une étape de détermination de quantité de correction consistant à déterminer une quantité de correction relativement à l'image cible de traitement, sur la base de l'équilibre de répartition calculé à l'étape de calcul d'équilibre de répartition de zone sombre.

**12.** Procédé de correction d'image exécuté par un ordinateur, comprenant :

une étape de détermination d'image consistant à déterminer, sur la base d'une valeur de pixel de chaque pixel d'une image cible de traitement, si l'image cible de traitement correspond ou non à une image sombre ;
une étape de calcul d'équilibre de répartition de zone sombre consistant à calculer, lorsque l'image cible de traitement est déterminée, au cours de l'étape de détermination, comme étant l'image sombre, un équilibre de répartition d'une fréquence d'apparence de pixels dans une zone sombre de l'image cible de traitement, la zone sombre correspondant à une zone où les pixels présentent une valeur de pixel inférieure à une première valeur, à diviser la zone sombre de l'image cible de traitement en une zone très sombre et une zone légèrement sombre, en utilisant une luminosité moyenne adjacente à une crête de la zone sombre, et à calculer un équilibre de répartition d'une fréquence d'apparence de pixels dans la zone très sombre, sur la base du nombre de pixels ; et
une étape de détermination de quantité de correction consistant à déterminer une quantité de correction relativement à l'image cible de traitement, sur la base de l'équilibre de répartition calculé à l'étape de calcul d'équilibre de répartition de zone sombre.

# FIG.1

IMAGE CORRECTING APPARATUS

CONTROL UNIT

IMAGE DETERMINING UNIT

DARK AREA DISTRIBUTION BALANCE CALCULATOR

CORRECTION AMOUNT DETERMINING UNIT

IMAGE CORRECTING UNIT

STORAGE UNIT

# FIG.2

NUMBER OF
PIXELS

AVERAGE BRIGHTNESS OF IMAGE

PEAK IN DARK AREA OF IMAGE

A B                                          BRIGHTNESS

# FIG.3

OUTPUT PIXEL VALUE y

(1)

(2)

INPUT PIXEL VALUE x

# FIG.4

# FIG.5

# FIG.6

# FIG.7

# FIG.8

```
                    ┌──────────┐
                    │  START   │
                    └────┬─────┘
                         │
       ┌─────────────────▼─────────────┐ ⌐S101
  NO   ◇────── ACCEPT IMAGE? ──────────◇
  ◄────┤                               │
       └───────────────┬───────────────┘
                       │YES    ⌐S102
            ┌──────────▼──────────────┐
            │ CALCULATE DISTRIBUTION  │
            │ BALANCE OF ENTIRETY OF  │
            │         IMAGE           │
            └──────────┬──────────────┘
                       │         ⌐S103
            ◇──────────▼──────────◇  NO
            ◇     DARK IMAGE?     ◇─────┐
            └──────────┬──────────┘     │
                       │YES    ⌐S104    │
            ┌──────────▼──────────────┐ │
            │ CALCULATE DISTRIBUTION  │ │
            │ BALANCE IN DARK AREA OF │ │
            │         IMAGE           │ │
            └──────────┬──────────────┘ │
                       │                │
                       │      ⌐S105     │
                       ◇                │
                     WHICH              │
  BLACK FLOATING  POSSIBILITY OF        │
  PHENOMENON     CAUSING BLACK FLOATING │
  ◄──────────    PHENOMENON OR          │
                 BLACK DEFACEMENT       │
                  PHENOMENON            │
                  IS PRESENT?           │
                       ◇                │
  BLACK DEFACEMENT     │                │
  PHENOMENON    ▼    ⌐S107             │
       ┌──────────────────────┐        │
       │  CORRECT TO BE BRIGHT │        │
       └──────────┬────────────┘        │
  ⌐S106           │              ⌐S108  │
┌──────────────┐  │       ┌──────────────────┐
│CORRECT TO BE │  │       │CORRECT ACCORDING │
│DARK OR TO BE │  │       │  TO AVERAGE      │
│SLIGHTLY      │  │       │  BRIGHTNESS      │
│BRIGHT        │  │       └────────┬─────────┘
└──────┬───────┘  │                │
       │          ▼                │
       └────────►┌─────┐◄──────────┘
                 │ END │
                 └─────┘
```

# FIG.9

NUMBER OF
PIXELS

AVERAGE BRIGHTNESS OF IMAGE (Ave1)

AVERAGE BRIGHTNESS OF
IMAGE × PREDETERMINED VALUE (Ave2)

PEAK IN DARK AREA OF IMAGE

A B                                             BRIGHTNESS

# FIG.10

NUMBER OF
PIXELS

AVERAGE BRIGHTNESS OF IMAGE

AVERAGE BRIGHTNESS OF "0 TO 128"

PEAK IN DARK AREA OF IMAGE

A B                128                     BRIGHTNESS

# FIG.11

START

CALCULATE LEVEL RANGE OF
BRIGHTNESS OF VERY DARK PIXEL  ~ S201

CALCULATE NUMBER OF PIXELS "A"
BELONGING TO VERY DARK PIXEL  ~ S202

CALCULATE NUMBER OF PIXELS "B"
BELONGING TO SLIGHTLY DARK PIXEL  ~ S203

CALCULATE RATIO OF "A" TO "B"  ~ S204

END

# FIG.12

COMPUTER
110

BUS
180

| | |
|---|---|
| **RAM** (160) | **HDD** (130) |

**CPU** (140)

IMAGE DETERMINING PROCESS (140a)

DARK AREA DISTRIBUTION BALANCE CALCULATING PROCESS (140b)

CORRECTION AMOUNT DETERMINING PROCESS (140c)

**ROM** (150)

IMAGE DETERMINING PROGRAM (150a)

DARK AREA DISTRIBUTION BALANCE CALCULATING PROGRAM (150b)

CORRECTION AMOUNT DETERMINING PROGRAM (150c)

# FIG.13

NUMBER OF PIXELS

BLACK RANGE

REFERENCE VALUE B

REFERENCE VALUE A

BRIGHTNESS

# FIG.14-1

NUMBER OF PIXELS

BLACK
RANGE

REFERENCE VALUE
B

REFERENCE VALUE
A

BRIGHTNESS

# FIG.14-2

NUMBER OF PIXELS

BLACK
RANGE

REFERENCE VALUE
B

REFERENCE VALUE
A

BRIGHTNESS

**EP 2 290 945 B1**

**REFERENCES CITED IN THE DESCRIPTION**

**Patent documents cited in the description**

- JP 6332399 A
- GB 2418316 A
- JP 2007189575 A